# EUROPEAN PATENT APPLICATION

(11) **EP 4 603 340 A1**
(43) Date of publication of application: **20.08.2025**
(21) Application number: 24157709.7
(22) Date of filing: 14.02.2024
(51) Int. Cl.: B60S 1/08

(54) **A MOTOR FOR A WIPER DRIVE SYSTEM, A WIPER DRIVE SYSTEM AND A VEHICLE**

(71) Applicant: Valeo Systèmes d'Essuyage, 78322 Le Mesnil Saint Denis (FR)
(72) Inventor: SZYMKOWICZ, Kamil, SKAWINA (PL)
(74) Representative: Valeo Visibility

(57) **Abstract**

The present invention relates to a motor for a wiper drive system comprising: A cam (14) with a cam surface (30) extending at least partially around a central point (28), the cam surface (30) having a first section (31) and a second section (32), the cam surface (30) of the first section (31) being at a greater distance from the central point (28) of the cam (14) than the cam surface (30) of the second section (32); A cam follower for establishing an electrical contact generating a signal relative to the position of the wiper system, the drive of the cam follower by the first section (31) of the cam surface (30) establishing the electrical contact. The invention also relates to a wiper drive system and a vehicle.

## Description

### Technical field

The invention pertains to a motor for a wiper drive system, to a wiper drive system with the motor and a vehicle with the wiper drive system.

### Prior art

A wiper drive system for a window, such as a vehicle windshield, comprises one or more motor-driven wiper blades. The blades move back and forth between a park position and an end position. It is important to know the position of the wiper system and especially the position of the wiper blades on the window to determine, for example, when they reach the park position.

It is thus desirable to develop a motor that can accurately determine the position of the wiper drive system.

### Disclosure of the invention

According, therefore, to a first aspect, the invention is directed towards a motor for a wiper drive system comprising a cam with a cam surface extending at least partially around a central point, the cam surface having a first section and a second section, the cam surface of the first section being at a greater distance from the central point of the cam than the cam surface of the second section; and a cam follower for establishing an electrical contact generating a signal relative to the position of the wiper drive system, the drive of the cam follower by the first section of the cam surface establishing the electrical contact.

Such a motor is advantageous in that it generates a signal of an increased duration, as compared to the cam profiles that are known in the art and might otherwise be employed in a windscreen wiper motor. In particular, the shape of the cam so configured will engage the follower over a greater distance, and thus cause its motion for a greater duration of time, all else being equal.

Consequently, the signal so generated is more easily and clearly detected and discerned by any control electronics that might be employed along with the windscreen wiper motor, thus improving the performance of the windscreen wiper system generally.

Preferably, the drive of the cam follower by the second section of the cam surface interrupts the electrical contact.

In this way, the signal relative to the position of the windscreen wiper system is so generated, in a simple and reliable manner.

Preferably, the cam follower comprises a rotatable disc with radial branches, the cam follower being driven by successive drive of the radial branches by the cam.

More preferably, the cam follower comprises the branches on one face fo the disc and comprises electrical connections on the other face of the disc, the angular position of the electrical connections corresponding to the angular position of the branches.

More preferably, the motor further comprises conductor tracks in contact with the electrical connections of the cam follower, the conductor tracks comprising a battery plate, a ground plate, and a park plate, the drive of the cam follower establishing an electrical contact between one of the electrical connections and the ground plate or the battery plate, the other electrical connections being in electrical contact with the park plate, the position of the wiper being determined by the signal generated by the electrical contact between one of the electrical connections of the cam follower and the ground plate or the battery plate of the conductor tracks.

In a preferred embodiment, the cam follower comprises at least two pairs of branches, the branches of each pair being arranged diametrically opposite each other.

Preferably, the cam follower comprises four branches arranged in two pairs, the round plate and the battery plate being angularly offset from each other by an angle having a value other than a multiple of 90°In a preferred embodiment, the second section extends around the central point and the first section flares out from the second section away from the central point.

Advantageously, the cam comprises two first sections that flare out from a respective extremity of the second section, away from the central point.

Preferably, the cam is axially symmetric.

Preferably, the central point is configured to be set in rotational movement about an axis of rotation, the cam having an axial symmetry along an axis of symmetry passing through the central point and the axis of rotation.

According to a second aspect, the invention is directed towards a windscreen wiper drive system according to the above.

Preferably, the windscreen wiper drive system further comprises at least one wiper blade, the wiper blade being driven in movement by the motor, wherein the wiper blade is movable between a first position and a second position, the signal generated by one of the electrical connections established by the cam follower indicating the position reached by the wiper blade.

More preferably, the signal generated by the electrical contact between one of the electrical connections of the cam follower and the ground plate indicates the first position of the wiper, and the signal generated by the electrical contact between one of the electrical connections of the cam follower and the battery plate indicates the second position of the wiper.

According to a third aspect, the invention is directed towards a vehicle comprising a windscreen wiper drive system according to the above.

In the framework of this document, the use of the indefinite article "a", "an" or the definite article "the" to introduce an element does not exclude the presence of a plurality of these elements. In this document, the terms "first", "second", "third" and the like are solely used to differentiate elements and do not imply any order in these elements.

In the framework of the present document, the use of the verbs "comprise", "include", "involve" or any other similar variant, as well as their conjugational forms, cannot exclude the presence of elements other than those mentioned. When the verb "comprise" is used for defining an interval by the terms "comprised between" two values, these two values should not be interpreted as excluded from the interval.

All the embodiments of the motor and the advantages of these embodiments apply mutatis mutandis to the present wiper drive system and vehicle and vice versa.

### Brief description of the figures

Other characteristics and advantages of the present invention will appear on reading the following detailed description, for the understanding of which, it is referred to the attached figures where:
- Figure 1 illustrates a top view of a cam mechanism for a motor according to the invention;
- Figure 2 illustrates a side view of the mechanism of figure 1;
- Figure 3 illustrates a detail of the mechanism of figure 1;
- Figure 4 illustrates a detail of the mechanism of figure 1;
- Figure 5 illustrates a detail of the mechanism of figure 1.

The drawings in the figures are not scaled. Similar elements can be assigned by similar references in the figures. In the framework of the present document, identical or analogous elements may have the same references. The presence of reference numbers in the drawings cannot be considered as limiting, in particular if these numbers are indicated in the claims.

Description of preferred embodiments of the present invention are hereafter described with references to figures, but the invention is not limited by these references. In particular, the drawings or figures described below are only schematic and are not limiting in any way.

### Description of specific embodiments of the invention

The invention relates to a motor for a wiper drive system, the motor comprising a cam with a cam surface extending at least partially around a central point. The cam surface has a first section and a second section. The cam surface of the first section is at a greater distance from the central point than the cam surface of the second section. The motor also comprises a cam follower for establishing an electrical contact generating a signal relative to the position of the wiper drive system. The drive of the cam follower by the first section of the cam surface establishes the electrical contact. The first section contacts the cam follower at an early stage during cam movement in comparison to the relative position of the cam and the cam follower. In other words, the cam in motion pushes the cam follower in advance, enabling the cam follower to establish an electrical contact generating a signal in advance too. The signal is thus extended in time, enabling a better detection of the motor position and thus a more accurate determination of the position of the wiper system, in particular, the positions of the wiper blades on a windshield.

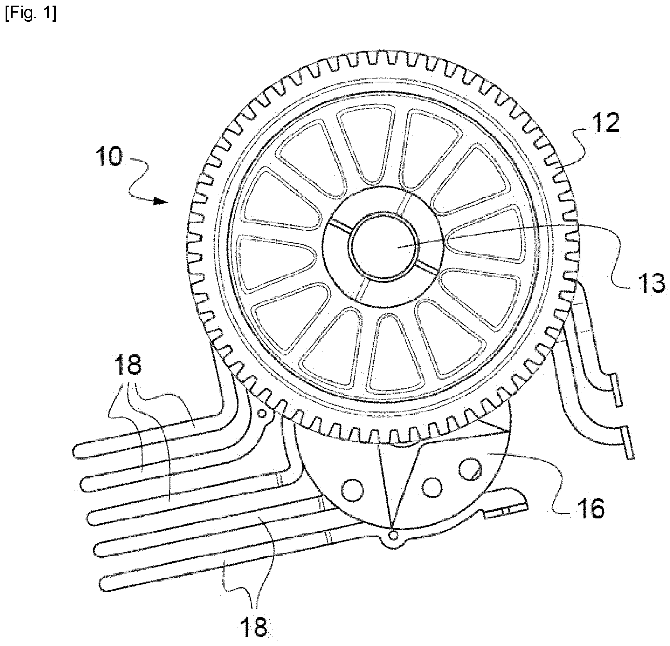

Figure 1 illustrates a view of the motor 10 according to the invention. The motor 10 comprises a wheel 12 driven in rotation around an axis 13. The wheel 12 supports a cam 14 not visible in figure 1 (i.e. on the non-visible side of the wheel 12). The wheel 12 drives the cam 14 which in turn drives a cam follower 16. The cam follower 16 is suitable for establishing an electrical contact with conductor tracks 18. More precisely, the cam follower 16 is suitable for establishing an electrical contact with a ground plate 181, a battery plate 183 and a park plate 182 of the conductor tracks. This electrical contact generates a signal relative to the position of the wiper system.

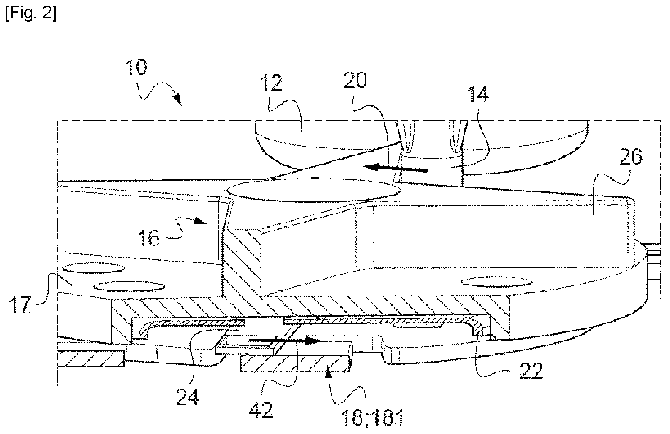

Figure 2 illustrates a side view of the motor 10 of figure 1. A part of the wheel 12 is represented as well as the cam 14. The cam 14 drives the cam follower 16. The cam follower 16 is driven on one of its faces by the cam 14 and supports a conductive plate 22 on the other of its faces. The conductive plate 22 of the cam follower 16 is suitable for performing an electrical contact with the conductor tracks 18. More specifically, the conductive plate 22 features electrical connections 24 (also known as "fingers") enabling the conductive plate 22 - and therefore the cam follower 16 - to establish electrical contact with the conductive tracks 18.

Figure 2 also illustrates the cam follower 16 in greater detail. Cam follower 16 is driven in motion by cam 14. An arrow 20 illustrates the movement of cam follower 16 driven by cam 14. Cam follower 16 can be mobile in rotation. Cam follower 16 is, for example, a disc 17 suitable for moving in rotation. The cam follower 16 can have branches 26, for example arranged on one face of the disc 17. The branches 26 are, for example, ribs projecting from the disc. The cam 14 comes into contact with the branches 26 to drive the cam follower 16 into motion. The wheel 12 supporting the cam 14 can make a complete revolution and drive one branch 26 of the cam follower 16 with each rotation. The branches 26 are driven in succession. The cam follower 16 can have four branches 26 driven by the cam 14. The branches 26 can be arranged diametrically opposite each other in pairs. For example, the cam follower 16 may be a disc 17 with branches 26 extending radially across the disc in the form of a star, the branches 26 forming the branches of the star. Other shapes and numbers of arms 26 are also possible.

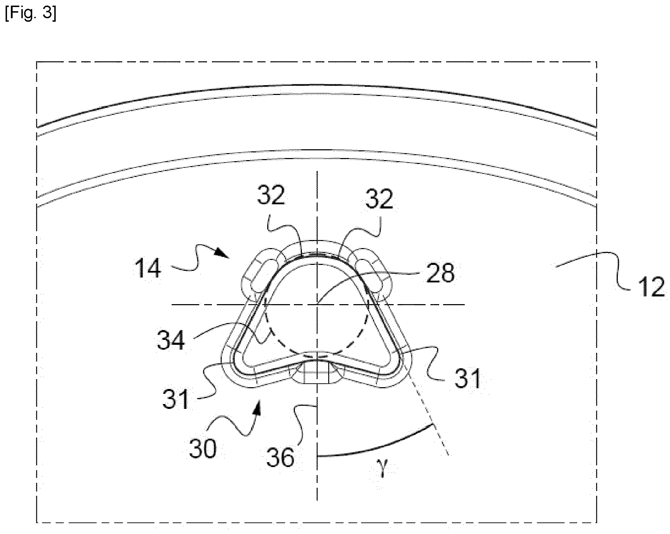

Figure 3 illustrates a detail of motor 10. In particular, Figure 3 illustrates the cam 14 in detail. Cam 14 can be rotated by wheel 12. Cam 14 has a cam surface 30. Cam surface 30 extends at least partially around a central point 28. Central point 28 may be the centre (or barycentre) of cam 14, but not necessarily. The point 28 is central in the sense that this point is or is close to the barycenter of the cam 14 (taken in section in a plane corresponding to the plane of movement of the cam 14). Cam surface 30 is suitable for driving the cam follower 16.

The profile of the cam surface 30 determines the movement of cam follower 16. Cam surface 30 can have several sections. In other words, the profile of the cam surface 30 can be divided into several sections. Cam surface 30 can have at least a first section 31 and a second section 32. The cam surface 30 of the first section 31 is at a greater distance from the central point 28 than the cam surface 30 of the second section 32. In other words, the cam surface 30 has a protrusion along the first section 31. The cam surface 30 is irregular, around the central point 28. The first section 31 forms a convex tip of the cam surface 30. The second section 32 extends around the central point 28 and the first section 31 flares out from (an extremity of) the second section 32 away from the central point 28. The first section 31 drives the cam follower 16 in advance of the position of the central point 28. The second section 32 is closer to the central point 28. The second section is centred on central point 28, for example, an arc of a circle centred on central point 28.

To illustrate the shape of the cam, a further cam surface 34 is shown in the figures, with a regular, circular shape. More specifically, the cam surface 34 is fictitious, and serves only to illustrate the shape of the cam surface 30 according to an embodiment of the invention.

In Fig. 3, cam surface 34 is shown as a dotted circle centred on central point 28. The cam surface 34 is superimposed on the second section 32 of the cam surface 30, and the first section 31 of the cam surface 30 is at a greater distance from the central point 28 than the entire cam surface 34. The first section 31 flares out from the second section 32 away from the central point 28 while the cam surface 34 is around and centred on central point 28. Thus, when the cam 14 is driven into motion, the cam 14 can contact the cam follower 16 via the first section 31 in advance of the cam surface 34.

The cam 14 may comprise two first sections 31 that flare out from a respective extremity of the second section 32, away from the central point 28. More specifically, the cam surface 30 may have an (inverted) V shape, with the tip of the V formed by the second section 32 and the two arms of the V each formed by a first section 31. The two first sections 31 are two sides inclined to each other and meet at an acute angle at the second section forming the tip, an apex. The cam surface 30 has a flared shape where the inclined sides formed by the two first sections 31 gradually widen as they move away from the apex formed by the second section 32. This creates a broader opening at the base (away from the section section) compared to the apex (formed by the section section), giving the cam surface 30, and thus the cam 14, a flared appearance. The cam surface 30 is generally triangular in shape. The first two sections 31 are connected to each other by the second section 32 and to each other directly, forming a base.

Cam 14 can be symmetrical, and in particular cam 14 can be axially symmetrical. For example, cam 14 may have an axis of symmetry 36 passing through the central point 28. The second section is itself symmetrical with respect to the axis of symmetry 36, being an arc of a circle on either side of the axis of symmetry 36. With the first two sections 31, the cam 14 can be symmetrical with respect to the axis of symmetry 36. This makes it possible, for example, to implement cam 14 in a motor 10 that can operate in clockwise and anti-clockwise directions. The V-shaped cam 14 therefore has the axis of symmetry 36 passing through the tip or apex of the V and the central point 28.

Furthermore, due to the difference in distance from the central point 28 of the first section 31 and the second section 32, the cam has no further axes of symmetry. Cam 14 is not rotationally symmetrical. Cam 14 has no symmetry around its central point 28. The cam 14 has only axial symmetry, along axis 36 passing through the middle of the second section 32 and the central point 28. Furthermore, the central point 28 is configured to be set in a rotational movement about the axis 13 of rotation of the wheel 12, the cam 14 having an axial symmetry along the axis 36 of symmetry passing through the central point 28 and the axis 13 of rotation. This means that during the rotational movement, the first section 31 forms a leading face to the rest of the cam 14, allowing the cam 14 to contact the cam follower 16 in advance. This can be seen by comparing the shape of the first section 31 with the fictitious cam surface 34 in figure 3, the cam surface 34 being rotationally symmetrical about the central point 28.

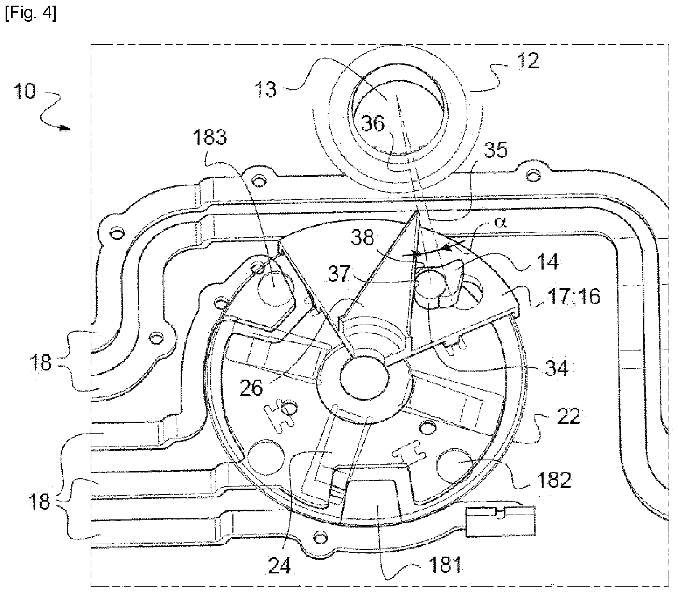

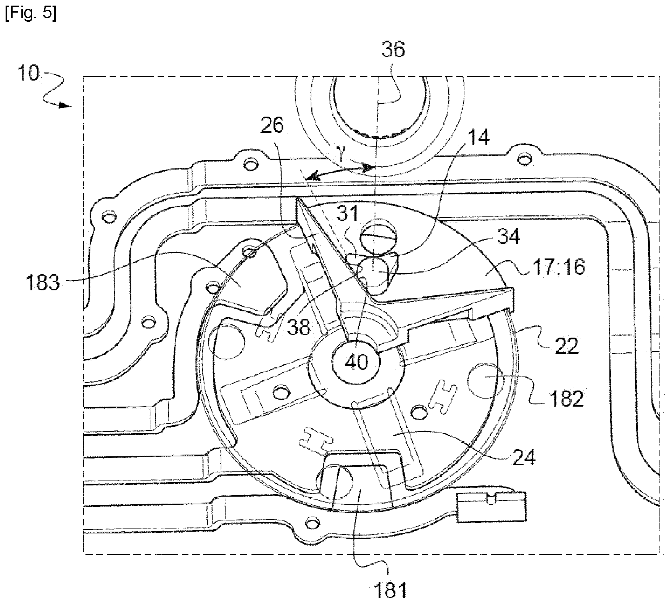

Figures 4 and 5 illustrate a detail of motor 10. A partial view is given of the wheel 12 driving the cam 14. A partial view is given of the cam follower 16. For this, a branch 26 is shown, as well as the conductive plate 22. Conductive plate 22 features electrical connections 24, which establish electrical contact with conductor tracks 18. More specifically, the branches 26 correspond on one face of the disc 17 to the electrical connections 24 on the other face of the disc 17. The angular position of an electrical connection 24 on one face of disc 17 corresponds to the angular position of a branch 26 on the other face of disc 17. In the example shown in Figure 4, three electrical connections 24 are visible (corresponding to three non-visible branches 26) and one branch 26 is visible (corresponding to a fourth non-visible electrical connection 24).

In Figure 4, an electrical connection 24 (also known as a "park finger") establishes contact with a track 18 (as indicated in Figure 2 by arrow 42). More specifically, one electrical connection 24 contacts a track 18 corresponding to the ground plate 181. The other electrical connections 24 are in contact with a track 18 corresponding to the park plate 182. A current flows between the park plate 182, the (three) electrical connections 24, the conductive plate 22, the (fourth) electrical connection 24 and then the ground plate 181. Such electrical contact established by the cam follower 16 generates a signal relating to the position of the wiper system. In particular, this signal (called a park signal) can indicate that the wiper system is in park position - or in other words, that the wiper blades are in a park position or rest position. This park/rest position generally, but not necessarily, corresponds to a lower extremity of the trajectory of the windscreen wiper blade, proximate to a lower edge of the windscreen.

In Figure 5, electrical connection 24 is leaving track 18. More specifically, electrical connection 24, which was in contact with ground plate 181 in figure 4, is leaving ground plate 181 in figure 5. The other electrical connections 24 are in contact with park plate 182. The current flowing between the park plate 182, the (three) electrical connections 24, the conductive plate 22, the (fourth) electrical connection 24 and then the ground plate 181 will be interrupted. The interruption of the electrical contact established by the cam follower indicates the end of the signal relating to the position of the wiper system in park position, and thus that the windscreen wiper has moved out of the park position. The duration of the signal corresponds to the contact time between electrical connection 24 and ground plate 181.

The operation of motor 10 and a method of outputting a position signal are as follows. In figure 4, cam 14 is driven in motion by wheel 12. For example, cam 14 rotates clockwise about axis 13. The first section 31 of cam 14 comes into contact with cam follower 16, in particular branch 26. A comparison is shown in Figure 4 between the angular position occupied by the cam 14 coming into contact with the branch 26 and the angular position occupied by the fictitious cam surface 34 coming into contact with the branch 26. There is a difference in angle α between the two angular positions of the centreline (or axis of symmetry) 36 of cam 14 and the centreline 35 of cam surface 34.

In other words, the fictitious cam surface 34 comes into contact with the branch 26 at point 37 only after it has travelled a greater distance by an angle α. With the centrelines 36, 35 at the same angular position, cam 14 begins to drive cam follower 16 in advance, ahead of cam surface 34.

The cam surface thus 30 makes an earlier contact with the cam follower 16. This is achieved by the first section 31 being at a greater distance from the central point 28. The protrusion or flare formed by the first section 31 enables cam 14 to make early contact with cam follower 16 at point 38. Cam 14 then drives cam follower 16. The drive of the cam follower 16 by the first section 31 of the cam surface 30 establishes the electrical contact. The electrical connection 24 on the opposite face of the disc 17 and located 180° from the branch 26 in contact with cam 14 establishes electrical contact with ground plate 181.

Thanks to the first section 31, this electrical contact is established in advance of the same electrical contact with the cam surface 34. Then, as cam 14 drives the cam follower, electrical connection 24 remains in contact with ground plate 181. To this aim, the change of contact points from 38 to 40 (figure 5) along the cam surface 30 happens when the electrical connexion 24 is above the ground plate 181. The contact points 38, 40 between cam 14 and cam follower 16 change from the first section 31 to the second section 32. Further driving of the cam follower 16 by the second section 32 of the cam surface 30 interrupts the electrical contact between the electrical connection 24 and the ground plate 181. The electrical contact is interrupted when the electrical connection 24 leaves the ground plate 181. The inclination of cam surface 30 between points 38 and 40 is at an angle γ to axis 36 of symmetry passing through axis 13 of rotation and central point 28. The angle γ cannot be too small to prevent the cam 14 from missing the cam follower 16 (star branch 26) at the entrance. The angle γ ensures that the cam 14 will leave the cam follower 16 at a point on the second section 32 that is the same as the fictitious surface of the cam 34.

Consequently, thanks to the first section 31, the cam 14 begins to drive the cam follower 16 at an early stage and the cam 14 drives the cam follower 16 to establish a longer electrical contact and signal. Incidentally, the cam surface 30 between point 38 and point 40 may be substantially flat or or curved, depending on the motion profile required.

In other words, if the angular movement of the fictive cam surface 34 corresponding to the electrical connexion 24 (« park finger») over the ground plate 181 is β, and if the angular velocity of the wheel 12 (and the cam 14) is ω, the signal times over the ground plate 181 are
- for fictive cam surface 34: T1 = β/ω
- for cam 14: T2 = (α + β)/ω.

Thus the signal generated by the cam 14 is longer. In other words, the irregular cam surface 30 makes it possible to increase the signal time in comparison to a cam with a regular cam surface. The absence of symmetry of revolution in the cam 14 makes it possible to increase the signal duration.

More particularly, the flaring of the first section(s) 31 makes it possible to increase the signal. The park signal is longer, because the wheel 12 needs to travel a longer angular distance with the cam surface 30 (once in contact with the cam follower 16) than with the fictious cam surface 34 (once in contact with the cam follower 16). The cam surface 30 has an earlier start position and the same exit position as the fictitious cam surface 34. The cam 14 is thus a guiding feature in the wheel 12 increasing the park signal duration in an anti-chattering mechanism. In the frame of the detection of the park position of the wiper system, the park signal obtained by the cam 14 lasts for example 22ms at 16V.

The invention also relates to a wiper drive system comprising the motor 10. The wiper drive system also comprises at least one wiper blade driven in motion by the motor 10. The wiper blade is movable between a first position corresponding to a park position; and a second position corresponding to an extreme position.

As mentioned above, the first, park position generally, but not necessarily, corresponds to a lower extremity of the trajectory of the windscreen wiper blade, proximate to a lower edge of the windscreen. Likewise, the second, extreme position corresponds to the opposite extremity of the trajectory of the windscreen wiper blade.

The signal generated by one of the electrical connections 24 established by the cam follower 16 determines the position reached by the wiper blade. Thanks to the cam 14, any signal related to the position of the wiper blade is longer in time. Thus, the position of the wiper drive system generally, and the position of the wiper blade in particular, is determined more accurately.

Notably, the signal generated by the electrical contact between one of the electrical connections 24 of the cam follower 16 and the ground plate 181 determines the park position of the wiper blade(s). Also, the signal generated by the electrical contact between one of the electrical connections 24 of the cam follower 16 and the battery plate 183 determines the extreme position of the wiper blade(s). Battery plate 183 and ground plate 181 are angularly offset by an angle of a value other than a multiple of 90°. This ensures that two electrical connections 24 are not simultaneously in contact with the battery plate 183 and the ground plate 181.

The invention also relates to a vehicle comprising the wiper drive system. The "v-like" shape of the guiding feature (cam 14) on the wheel 12 makes transition of the park finger (electrical connection 24) over ground plate 181 longer during sliding over "star-like" part of the mechanism. The shape is symmetrical to work for both clockwise and anti-clockwise motors. A longer contact with the ground plate generates a longer park signal that is easier to detect.

The present invention has been described in relation to the specific embodiments which have a value that is purely illustrative and should not be considered to be limiting. The various parts or elements herein described, and in particular their respective embodiments and advantages, may be considered independently of each other. The skilled person will notice that the invention is not limited to the examples that are illustrated and/or described here above. The invention comprises each of the new technical characteristics described in the present document, and their combinations.

## Claims

1. A motor (10) for a wiper drive system comprising:
• A cam (14) with a cam surface (30) extending at least partially around a central point (28), the cam surface (30) having a first section (31) and a second section (32), the cam surface (30) of the first section (31) being at a greater distance from the central point (28) of the cam (14) than the cam surface (30) of the second section (32); and
• A cam follower (16) for establishing an electrical contact generating a signal relative to the position of the wiper drive system, the drive of the cam follower (16) by the first section (31) of the cam surface (30) establishing the electrical contact.

2. The motor (10) according to the preceding claim, wherein the drive of the cam follower (16) by the second section (32) of the cam surface (30) interrupts the electrical contact.

3. The motor (10) according to any one of claims 1 or 2, wherein the cam follower (16) comprises a rotatable disc (17) with radial branches (26), the cam follower (16) being driven by successive drive of the radial branches (26) by the cam (14).

4. The motor (10) according to the claim 3, wherein the cam follower (16) comprises the branches (26) on one face of the disc and comprises electrical connections (24) on the other face of the disc, the angular position of the electrical connections (24) corresponding to the angular position of the branches (26).

5. The motor (10) according to the claim 4, further comprising
• Conductor tracks (18) in contact with the electrical connections (24) of the cam follower (16), the conductor tracks (18) comprising a battery plate (183), a ground plate (181), and a park plate (182),
The drive of the cam follower (16) establishing an electrical contact between one of the electrical connections (24) and the ground plate (181) or the battery plate (183), the other electrical connections (24) being in electrical contact with the park plate (182),
The position of the wiper being determined by the signal generated by the electrical contact between one of the electrical connections (24) of the cam follower (16) and the ground plate (181) or the battery plate (182) of the conductor tracks.

6. The motor (10) according to the claim 5, wherein the cam follower (16) comprises at least two pairs of branches (26), the branches of each pair being arranged diametrically opposite each other.

7. The motor (10) according to claim 6, wherein the cam follower (16) comprises four branches (26) arranged in two pairs, the round plate (181) and the battery plate (182) being angularly offset from each other by an angle having a value other than a multiple of 90°.

8. The motor (10) according to any of claims 1 to 7, wherein the second section (32) extends around the central point (28) and the first section (31) flares out from the second section (32) away from the central point.

9. The motor (10) according to any one of claims 1 to 8, wherein the cam comprises two first sections (31) that flare out from a respective extremity of the second section (32), away from the central point (28).

10. The motor (10) according to any one of claims 1 to 9, wherein the cam (14) is axially symmetrical.

11. The motor (10) according to any one of claims 1 to 10, in which the central point (28) is configured to be set in rotational movement about an axis (13) of rotation, the cam (14) having an axial symmetry along an axis of symmetry (36) passing through the central point (28) and the axis (13) of rotation.

12. A windscreen wiper drive system comprising the motor (10) according to any one of claims 1 to 11.

13. The windscreen wiper drive system according to the claim 12, the windscreen wiper drive system further comprising at least one wiper blade, the wiper blade being driven in movement by the motor (10), wherein the wiper blade is movable between a first position and a second position, the signal generated by one of the electrical connections (24) established by the cam follower (16) indicating the position reached by the wiper blade.

14. The windscreen wiper drive system according to the claim 13, wherein
• The signal generated by the electrical contact between one of the electrical connections (24) of the cam follower (16) and the ground plate (181) indicates the first position of the wiper, and
• The signal generated by the electrical contact between one of the electrical connections (24) of the cam follower (16) and the battery plate (183) indicates the second position of the wiper.

15. A vehicle comprising the windscreen wiper drive system according to any one of claims 12 to 14.
